# EUROPÄISCHE PATENTANMELDUNG

(11) **EP 0 749 889 A1**
(43) Veröffentlichungstag der Anmeldung: **27.12.1996**
(21) Anmeldenummer: 95109788.0
(22) Anmeldetag: 23.06.1995
(51) Int. Cl.: B62D 6/02, B62D 5/083

(54) **Lenkventil**

(71) Anmelder: TRW Fahrwerksysteme GmbH & Co. KG, 40547 Düsseldorf (DE)
(72) Erfinder: Pfeifer, Arnd, Dipl.-Ing., D-47877 Willich (DE)
(74) Vertreter: Stenger, Watzke & Ring Patentanwälte

(57) **Zusammenfassung**

Um ein Lenkventil bestehend aus einer Eingangswelle, einer Ausgangswelle, einer die Eingangswelle umgebenden Ventilhülse und einer durch Druck beaufschlagbaren, ein Zentriermoment erzeugenden Reaktionsvorrichtung einfacher herstellen und zentrieren zu können, wobei gleichzeitig das Lenkventil gegenüber herkömmlichen Lenkventilen kürzer ausgebildet werden kann, wird vorgeschlagen, daß die Druckmittelleitungen für den System- bzw. Arbeitsdruck sowie den Tankrücklauf zwischen der Eingangswelle 2 und der Ventilhülse 5 gebildet sind und die Reaktionsvorrichtung 6 eine zwischen Eingangswelle 2 und Ventilhülse 5 radial wirkende Kraft ausübt.

## Beschreibung

Die Erfindung betrifft ein Lenkventil zur Versorgung eines Stellgliedes mit Hydraulikdruck, bestehend aus einer Eingangswelle, einer Ausgangswelle, einer die Eingangswelle umgebenden Ventilhülse und einer durch Druck beaufschlagbaren, ein Zentriermoment erzeugenden Reaktionsvorrichtung.

Lenkventile der vorstehend beschriebenen Art werden insbesondere in Servolenk-Systemen eingesetzt. Eine mit einer Lenkstange verbundene Eingangswelle wirkt hydraulisch mit einer sie umgebenden Ventilhülse zusammen, die ihrerseits mit einer mit einem Ritzel versehenen Ausgangswelle verbunden ist. Das Ritzel wirkt auf die Zahnstange einer Lenkung. Von einer Pumpe wird Hydraulikflüssigkeit unter Druck durch das System gepumpt. Bei einer relativen Verdrehung der Eingangswelle zur Ventilhülse wird Hydraulikdruck einem Hydraulikmotor zugeführt, welcher die Zahnstangenbewegung in eine der beiden möglichen Richtungen unterstützt. Eine durch Druck beaufschlagbare Reaktionsvorrichtung ist an dem System angeordnet, um ein Zentriermoment zu erzeugen. Üblicherweise wird zu diesem Zweck ein mit einer Druckfeder beaufschlagter Reaktionskolben verwendet, der zusätzlich beispielsweise geschwindigkeitsabhängig mit Hydraulikdruck beaufschlagbar sein kann, wodurch das zu überwindende Drehmoment zur Verdrehung der Eingangswelle relativ zur Ventilhülse geschwindigkeitsabhängig variiert wird. Derartige vorbekannte Reaktionskolben sind drehfest gegenüber der Eingangswelle mittels Kugeln fixiert, die in auf der Eingangswelle angeordneten Längsnuten geführt werden. Weiterhin ist der Reaktionskolben durch eine Druckfeder in Richtung Ventilhülse vorgespannt. An der zum Reaktionskolben weisenden Stirnfläche der Ventilhülse ist ein sogenannter Erweiterungskolben angeordnet, der zusammen mit der gegenüberliegenden Stirnfläche des Reaktionskolbens eine elastische Drehmitnahme bildet. Zu diesem Zweck sind an den sich gegenüberliegenden Stirnflächen des Erweiterungskolbens und des Reaktionskolbens V-förmige Nuten angeordnet, in welche Kugeln eingesetzt sind. Wird auf die Eingangswelle ein Drehmoment aufgebracht, wird dieses über den Reaktionskolben und die elastische Drehmitnahme auf die Ventilhülse übertragen. Durch die in den V-förmigen Nuten angeordneten Kugeln der elastischen Drehmitnahme, Kugelkupplung genannt, wird das Drehmoment in eine axiale Kraft umgesetzt, welche gegen die Federkraft der den Reaktionskolben beaufschlagenden Feder wirkt. Sobald diese von der Kugelkupplung erzeugte Axialkraft die gegenwirkende Federkraft übersteigt, wird der Reaktionskolben von der Ventilhülse axial wegbewegt und eine relative Verdrehung zwischen Eingangswelle und Ventilhülse ermöglicht. Eine Variation des Drehmomentes kann dadurch erzeugt werden, daß ein einstellbarer Hydraulikdruck auf die der Feder gegenüberliegende Seite des Reaktionskolbens gebracht wird.

Neben der an sich unzulänglichen Kopplung zwischen Eingangswelle und Reaktionskolben, welche ein Bearbeiten der Eingangswelle zur Erzeugung von Längsnuten erforderlich macht und eine mechanische Schwächung und einen großen Herstellungsaufwand bedeutet, ist eine die Axialbewegung des Reaktionskolbens gegenüber der Eingangswelle erlaubende, eine relative Verdrehung des Reaktionskolbens gegenüber der Eingangswelle jedoch verhindernde Nuten-/Kugelanordnung praktisch nicht ohne Spiel herstellbar. Darüber hinaus müssen die vielen unterschiedlichen Einzelelemente in eine mechanische Grundeinstellung zur Montage gebracht werden, was aufgrund der vielen relativ bewegbaren Elemente schwierig ist. Weiterhin ist die Abdichtung schwierig, da die Reaktionskolbenoberseite gegen den durch die Eingangswelle geführten Tankrücklauf abgedichtet werden muß. Üblicherweise werden die Hydraulikmittelleitungen für den System- bzw. Arbeitsdruck zwischen der Ventilhülse und der Eingangswelle geführt, während zumindest die Tankrücklaufleitung durch die Eingangswelle hindurchgeführt ist. Hydraulikdruckabhängige Reaktionselemente werden mit einem von außen über besondere Leitungen herangeführten Druck beaufschlagt.

Wird beispielsweise ein durch eine Spiralfeder druckbeaufschlagter Reaktionskolben zur Zentrierung verwendet, hängt die sich ergebende Reaktionskolbenvorspannung von der Qualität der Ventilvormontage ab. Es entsteht eine unerwünschte Streubreite der einzustellenden Federvorspannung. Wegen der Verwendung der Spiralfeder ist darüber hinaus die Federkraft gegen den Reaktionskolben nicht konzentrisch. Es ergeben sich somit Verschränkungen des Ventils, die sich in Form von Reibung gegen die Eingangswelle bis hin zu Hysteresisproblemen auswirken.

Neben den beschriebenen Nachteilen wie schwere mechanische Einstellbarkeit, einem großen Bauteileaufwand und einer schwierigen hydraulischen Abdichtung besteht ein Nachteil vorbekannter Lenkventile der gattungsgemäßen Art darin, daß wegen der zusätzlichen, im wesentlichen axial wirkenden Reaktionselemente die Baugröße, insbesondere die Baulänge nicht reduziert werden kann.

Davon ausgehend liegt der Erfindung die **Aufgabe** zugrunde, ein Lenkventil der gattungsgemäßen Art dahingehend zu verbessern, daß die oben genannten Nachteile vermieden werden und das Lenkventil wirtschaftlicher herstell- und montierbar, praktisch wartungsfrei und störunanfällig ist und hinsichtlich der Baulänge gegenüber herkömmlichen Lenkventilen verkleinert werden kann.

Zur technischen **Lösung** dieser Aufgabe wird ein gattungsgemäßes Lenkventil dadurch verbessert, daß die Druckmittelleitungen für den System- bzw. Arbeitsdruck sowie den Tankrücklauf zwischen der Eingangswelle und der Ventilhülse gebildet sind und das Reaktionselement eine zwischen der Eingangswelle und der Ventilhülse radial wirkende Kraft ausübt.

Durch die Anordnung eines radial wirkenden Reaktionselementes wird in erster Linie der gesamte Bauteilbedarf zur Umlenkung von Drehmomenten in Axialkräfte vermieden. Darüber hinaus wird die mechanische Einstellung erheblich vereinfacht, da Bauteile nicht mehr gleichzeitig in einer relativen Winkelposition und einer relativen Axialposition zueinander eingerichtet werden müssen. Die in radialer Richtung wirkende Reaktionsvorrichtung kann zwischen Eingangswelle und Ventilhülse positioniert werden, so daß das Lenkventil gegenüber herkömmlichen Lenkventilen erheblich verkürzt ausgeführt werden kann. Weiterhin ist die Abdichtung vereinfacht. Durch die Anordnung der Druckmittelleitungen und dem Tankrücklauf zwischen Eingangswelle und Ventilhülse werden keine zusätzlichen Dichtmittel benötigt, um weitere Bauelemente wie beispielsweise herkömmliche Reaktionselemente abzudichten.

In vorteilhafter Weise wird vorgeschlagen, daß das Radialkräfte ausübende Reaktionselement durch ein Federelement druckbeaufschlagt ist. Auf diese Weise kann eine einfache mechanische Mittenzentrierung des Lenkventils bewirkt werden. Ein federbeaufschlagtes Reaktionselement übt eine zwischen Eingangswelle und Ventilhülse wirkende Radialkraft aus. So kann beispielsweise durch die einfache Ausbildung einer Nockenbahn an der Ventilhülseninnenwandung eine Trennung zwischen Bereichen hohen Drucks und Bereichen geringen Drucks bewirkt werden, wodurch eine Zentrierung ermöglicht ist. Mit Vorteil wird vorgeschlagen, daß das Reaktionselement durch Hydraulikdruck beaufschlagt ist. Durch diese Maßnahme ist es möglich, die in radialer Richtung wirkenden Kräfte in Abhängigkeit von Hydraulikdruckparametern zu regeln, beispielsweise geschwindigkeitsabhängig. Gemäß einem Vorschlag der Erfindung wird das Reaktionselement durch einen Steuerdruck beaufschlagt, welcher in besonders vorteilhafter Weise durch eine Axialbohrung in der Eingangswelle zugeführt wird.

Mit Vorteil wird vorgeschlagen, daß das Reaktionselement wenigstens einen zwischen der Eingangswelle und der Ventilhülse angeordneten Kolben aufweist, der druckabhängig in radialer Richtung bewegbar ist. Gemäß einem alternativen Vorschlag der Erfindung wird vorgeschlagen, daß das Reaktionselement zwischen der Eingangswelle und der Ventilhülse angeordnete Kugeln aufweist. Diese können wie die Kolben druckabhängig radial bewegt werden. In vorteilhafter Weise wird vorgeschlagen, daß die Kugeln ventilhülsenseitig in einem Sechskantring angeordnet sind. Beispielsweise können drei Kugeln in entsprechenden Nuten oder Bohrungen der Eingangswelle angeordnet und ventilhülsenseitig in einem wie vorgeschlagenen Sechskantring gehalten sein. Unter Druckbeaufschlagung werden die Kugeln bemüht sein, auf den Sechskantring ein Drehmoment auszuüben, bis jede der Kugeln in einer Ecke des Sechskants zur Anlage kommt. Ein Verdrehen der Eingangswelle relativ zur Ventilhülse erfordert dann ein Drehmoment, welches eine den auf die Kugel wirkenden Druck übersteigende Kraft erzeugen kann. In vorteilhafter Weise sind die Kugeln in der Eingangswelle in Bohrungen angeordnet, die in Winkeln von 120° zueinander in einer radialen Ebene der Eingangswelle ausgebildet sind.

Gemäß einem Vorschlag der Erfindung sind die Eingangswelle und die Ausgangswelle mittels eines Torsionsstabes miteinander verbunden.

Das erfindungsgemäße Lenkventil zeichnet sich dadurch aus, daß es in sehr einfachen Zentrierverfahren montiert werden kann. Das in radialer Richtung wirkende Kräfte ausübende Reaktionselement braucht zur Montage nach dem Einsetzen nur unter Druck gesetzt werden, so daß sich die aufgrund der Radialkräfte ergebende neutrale Verdrehposition zwischen Ventilhülse und Eingangswelle einstellen läßt, die rein mechanisch einer maximalen Ausrückposition der bewegbaren Bauteile des Reaktionselementes entspricht. Dann läßt sich beispielsweise der Sechskantring relativ zur Ventilhülse arretieren, wodurch das Lenkventil mechanisch eingestellt ist. Durch die Verwendung einfacher Reaktionselemente wird das erfindungsgemäße Lenkventil sehr kostengünstig und einfach herstellbar. Werden beispielsweise in Bohrungen in der Eingangswelle einsetzbare Kugeln verwendet, die in einem Sechskantring laufen, der mit der Ventilhülse verbunden wird, sind die genannten Bauteile bereits die einzigen Zusatzbauteile. Die Abdichtung wird wegen der Trennung der Leitungsbereiche zwischen Eingangswelle und Ventilhülse und der bedarfsweisen Führung von Steuerdruck durch die Axialbohrung der Eingangswelle erheblich vereinfacht.

In der einfachsten Ausführungsform können federbelastete Kugeln zwischen Eingangswelle und Ventilhülse angeordnet werden, wobei die Ventilhülse beispielsweise an der Innenwandung in Art eines Sechskantringes ausgebildet ist. Hierdurch wird eine Mittenzentrierung des Lenkventils bewirkt, so daß herkömmliche Torsionselemente nicht mehr erforderlich sind. In einer weiteren Ausführung können die Kugeln lose in Bohrungen der Eingangswelle eingesetzt und ventilhülsenseitig in einer sechskantringartigen Bahn geführt werden. Der durch das Innere der Eingangswelle geführte Steuerdruck bewirkt dann bei Druckaufbau zunächst eine Positionierung des Ventils in Neutralstellung. Um eine leckagefreie Verbindung zwischen der Ausgangswelle und der Steuerhülse herzustellen, können diese in einer hydraulisch balancierten Position miteinander verpreßt werden.

Weitere Vorteile und Merkmale der Erfindung ergeben sich aus der folgenden Beschreibung anhand der Figuren. Dabei zeigen:

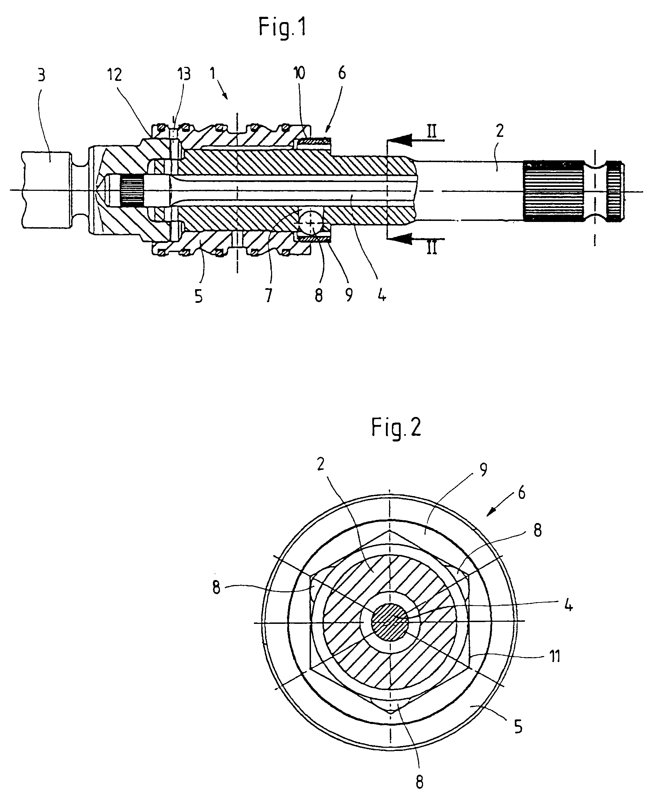

- Figur 1: eine schematische, teilgeschnittene Seitenansicht eines Ausführungsbeispiels eines Lenkventils und
- Figur 2: einen Schnitt entlang der Linie II-II gemäß Figur 1.

Das in den Figuren gezeigte Lenkventil 1 umfaßt eine Eingangswelle 2, die mit einem nicht gezeigten Lenkgestänge verbunden ist, sowie eine Ausgangswelle 3, die über ein nicht gezeigtes Ritzel mit einer Zahnstange verbunden ist. Die Eingangswelle 2 und die Ausgangswelle 3 sind über einen Torsionsstab 4 miteinander verbunden. Die Ausgangswelle 3 ist mit einer Ventilhülse 5 verbunden, die die Eingangswelle 2 umgibt. Die Ventilhülse 5 kann je nach baulicher Ausgestaltung auch als integriertes Bauteil mit der Ausgangswelle 3 gebildet sein. Zwischen der Eingangswelle 2 und der Ventilhülse 5 werden die Druckmittelleitungen für den System- bzw. Arbeitsdruck und den Tankrücklauf geführt. Zwischen der Eingangswelle 2 und der Ventilhülse 5 ist eine Reaktionsvorrichtung 6 angeordnet, mit welcher radial wirkende Kräfte ausgeübt werden. Im gezeigten Ausführungsbeispiel ist am freien Ende der Ventilhülse 5 ein Sechskantring 9 angeordnet und mit der Ventilhülse 5 an der Verbindung 10 verbunden. In dem Bereich, mit welchem die Eingangswelle 2 innerhalb des Sechskantringes 9 angeordnet ist, sind in der Eingangswelle 2 Bohrungen 7 ausgeführt, in welche Kugeln 8 eingesetzt sind. Die Kugeln 8 bewegen sich entlang der Sechskantbahn 11 im Inneren des Sechskantringes 9. Hinter der druckmitteldichten Verbindung 12 zwischen der Ventilhülse 5 und der Ausgangswelle 3 ist eine Bohrung 13 angeordnet, über welche Steuerdruck in das Innere der Eingangswelle geführt werden kann. Dieser Steuerdruck wirkt auf die in das Innere der Eingangswelle 2 zeigenden Oberflächen der Kugeln 8 und drückt diese nach außen. Unter Druck sind die Kugeln bestrebt, in die Ecken der Sechskantbahn 11 zu gelangen, wodurch das Ventil zentriert wird. Ja nach Steuerdruck ist ein entsprechendes Drehmoment zur relativen Verdrehung von Eingangswelle 2 zur Ventilhülse 5 erforderlich, wodurch die Kugeln 8 gegen den auf sie radial wirkenden Druck in die Bohrungen in der Eingangswelle hineingedrückt werden müssen, um sich entlang der Sechskantbahn 11 zu bewegen. Dieses druckabhängige Drehmoment erfordert somit druckabhängige Steuerkräfte. Damit können in Abhängigkeit diverser Parameter, beispielsweise der Geschwindigkeit, die Lenkkräfte bestimmt werden. Die nicht durch Kugeln besetzten Enden des Sechskantringes werden zur Bildung von Rücklaufleitungen verwendet.

Beim Zusammensetzen des gezeigten Lenkventils brauchen die einzelnen Bauteile nur in axialer Richtung relativ zueinander positioniert zu werden. Anschließend kann durch Aufbringen eines Systemdrucks die Ventilhülse relativ zur Eingangswelle hydraulisch zentriert werden. Anschließend kann die Ventilhülse 5 an der Verbindung 12 beispielsweise durch Pressen mit der Ausgangswelle 3 verbunden werden. Danach ist das Lenkventil 1 mechanisch zu zentrieren.

Werden zusätzlich zum Systemdruck noch andere, die Kugeln 8 vorspannenden Mittel wie beispielsweise Federn oder dergleichen eingesetzt, kann unter Umständen auf den Torsionsstab 4 verzichtet werden. Aufgrund der Tatsache, daß keine axial wirkenden Reaktionselemente erforderlich sind, kann neben der Reduktion auf eine Minimalzahl von Bauteilen auch die Baulänge verkürzt werden.

### Bezugszeichenliste

- 1: Lenkventil
- 2: Eingangswelle
- 3: Ausgangswelle
- 4: Torsionsstab
- 5: Ventilhülse
- 6: Reaktionsvorrichtung
- 7: Bohrung
- 8: Kugel
- 9: Sechskantring
- 10: Verbindung
- 11: Sechskantbahn
- 12: Verbindung
- 13: Bohrung

## Patentansprüche

1. Die Erfindung betrifft ein Lenkventil zur Versorgung eines Stellgliedes mit Hydraulikdruck, bestehend aus einer Eingangswelle, einer Ausgangswelle, einer die Eingangswelle umgebenden Ventilhülse und einer durch Druck beaufschlagbaren, ein Zentriermoment erzeugenden Reaktionsvorrichtung,
**dadurch gekennzeichnet,**
daß die Druckmittelleitungen für den System- bzw. Arbeitsdruck sowie den Tankrücklauf zwischen der Eingangswelle (2) und der Ventilhülse (5) gebildet sind und der Reaktionsvorrichtung (6) eine zwischen der Eingangswelle (2) und der Ventilhülse (5) radial wirkende Kraft ausübt.

2. Lenkventil nach Anspruch 1, dadurch gekennzeichnet, daß die Reaktionsvorrichtung zur Druckbeaufschlagung Federelemente aufweist.

3. Lenkventil nach einem der vorhergehenden Ansprüche, dadurch gekennzeichnet, daß die Reaktionsvorrichtung durch Hydraulikdruck beaufschlagt ist.

4. Lenkventil nach Anspruch 3, dadurch gekennzeichnet, daß die Reaktionsvorrichtung durch einen Steuerdruck beaufschlagt ist.

5. Lenkventil nach Anspruch 4, dadurch gekennzeichnet, daß der Steuerdruck durch eine in der Eingangswelle (2) ausgebildetete, axial verlaufende Bohrung zuführbar ist.

6. Lenkventil nach einem der vorhergehenden Ansprüche, dadurch gekennzeichnet, daß die Reaktionsvorrichtung (6) zwischen der Eingangswelle (2) und der Ventilhülse (5) angeordnete Kolben aufweist.

7. Lenkventil nach einem der Ansprüche 1 bis 5, dadurch gekennzeichnet, daß die Reaktionsvorrichtung (6) zwischen der Eingangswelle und der Ventilhülse angeordnete Kugeln aufweist.

8. Lenkventil nach einem der vorhergehenden Ansprüche, dadurch gekennzeichnet, daß die Reaktionsvorrichtung ventilhülsenseitig eine Steuerkurven-Innenflächenausbildung aufweist.

9. Lenkventil nach Anspruch 8, dadurch gekennzeichnet, daß die Reaktionsvorrichtung ventilhülsenseitig eine Sechskant-Innenflächenausbildung aufweist.

10. Lenkventil nach Anspruch 9, dadurch gekennzeichnet, daß der Sechskantring in die Ventilhülse eingepreßt ist.

11. Lenkventil nach einem der Ansprüche 7 bis 10, dadurch gekennzeichnet, daß die Reaktionsvorrichtung drei Kugeln aufweist, die in drei im Winkel von 120° in der Eingangswelle angeordnete Bohrungen (7) angeordnet sind.

12. Lenkventil nach einem der vorhergehenden Ansprüche, dadurch gekennzeichnet, daß die Eingangswelle (2) mit der Ausgangswelle (3) über einen Torsionsstab (4) verbunden ist.

13. Lenkventil nach einem der vorhergehenden Ansprüche, dadurch gekennzeichnet, daß die Ventilhülse auf die Ausgangswelle aufgepreßt ist.
